# FASCICULE DE BREVET EUROPEEN

(11) **EP 3 313 229 B1**
(45) Date de publication et mention de la délivrance du brevet: **16.09.2020**
(21) Numéro de dépôt: 16747823.9
(22) Date de dépôt: 29.06.2016
(51) Int. Cl.: A45D 29/00, A44C 15/00, A45D 44/00

(54) **ARTICLE POUR DÉCORER LA PEAU OU UN ONGLE D'UN HUMAIN ET PROCÉDÉ METTANT EN OEUVRE UN TEL ARTICLE**
ARTIKEL ZUM DEKORIEREN VON HAUT ODER NÄGELN EINER PERSON UND VERFAHREN ZUR VERWENDUNG SOLCHER ARTIKEL
ARTICLE FOR DECORATING A PERSON'S SKIN OR NAILS, AND METHOD USING SUCH AN ARTICLE

(30) Priorité: 29.06.2015 FR 1556060
(43) Date de publication de la demande: 02.05.2018
(73) Titulaire: L V M H RECHERCHE, 45800 St. Jean de Braye (FR)
(72) Inventeur: CHEVALIER, Marc, 95130 Franconville (FR)
(74) Mandataire: Plasseraud IP
(86) Numéro de dépôt international: PCT/FR2016/051615
(87) Numéro de publication internationale: WO 2017/001777

(56) Documents cités:
- DE-A1- 3 337 458
- FR-A1- 2 999 063
- US-A1- 2002 011 014
- US-A1- 2013 153 133
- Schueller Randy: "How temporary tattoo is made - material, manufacture, used, processing, components, industry, Raw Materials", , 13 décembre 2014 (2014-12-13), XP055313596, Extrait de l'Internet: URL:http://www.madehow.com/Volume-4/Tempor ary-Tattoo.html [extrait le 2016-10-25]

## Description

### DOMAINE DE L'INVENTION

L'invention a trait aux articles de décoration du corps humain, et en particulier aux articles de décoration éphémère à appliquer sur la peau ou sur les ongles.

### ARRIERE-PLAN DE L'INVENTION

Il existe de nombreux produits à appliquer sur la peau ou sur les ongles, destinés à embellir, maquiller, camoufler ou encore mettre en valeur de façon éphémère une partie du corps humain. On trouve ainsi des maquillages sous plusieurs formes (poudre, crème, paillettes), conditionnés dans des flacons munis ou non d'applicateurs.

On trouve également des tatouages éphémères à appliquer sur la peau ou sur les ongles, qui se présentent sous la forme d'un décor aux contours prédéterminés supportés par une feuille. Le décor est transféré sur la peau ou sur les ongles en appliquant la feuille à l'endroit où l'on souhaite positionner le tatouage (la face de la feuille supportant le décor étant positionnée contre la peau ou l'ongle) et l'on humidifie la face extérieure de la feuille de sorte à décoller le décor de son support pour le transférer.

L'invention s'intéresse en particulier aux décors à transférer sur la peau ou les ongles.

On trouve également des décors type « stickers » à appliquer sur la peau ou sur les ongles : de tels décors se présentent sous la forme d'images autocollantes aux contours prédéterminés qu'il faut découper pour l'adapter à la forme et à la taille d'un ongle, par exemple.

Le résultat obtenu avec de tels stickers est peu précis et pas toujours esthétique, par exemple ne recouvrant pas la totalité de la surface à décorer.

La demande de brevet FR 2 999 063 décrit un article pour décorer la peau ou un ongle d'un humain, comportant :
un élément de décor à appliquer sur la peau ou sur au moins un ongle d'un humain, ledit élément de décor comportant un décor à transférer au moins partiellement sur la peau ou sur un ongle d'un humain, ledit décor comportant au moins une couche de décor, présentant une première surface externe et une seconde surface externe et un film support dudit décor, ledit film support étant fixé de façon amovible sur la première surface externe de ladite couche de décor. L'article comporte en outre un produit fluide applicable sur la peau au moyen d'un applicateur, le produit fluide ayant la particularité de devenir collant en séchant.

Un tel article ne permet pas d'obtenir des résultats précis, voire est capable de détériorer le décor en le dissolvant partiellement à son contact.

Par ailleurs, le document DE3337458 décrit un article pour décorer la peau ou un ongle, dont l'application requiert une source de rayonnement thermique et un élément pressant, ce qui complique sa mise en œuvre.

Le document US2002/0011014 décrit un autre article pour décorer la peau.

### RESUME DE L'INVENTION

L'invention vise à offrir un article pour décorer la peau ou un ongle d'un humain qui permet d'obtenir un résultat de décor précis, sans limitation de forme, et simple à mettre en œuvre.

L'invention propose à cet effet un article pour décorer la peau ou un ongle d'un humain, comportant un activateur qui est supportable par la peau ou un ongle d'un humain et un élément de décor à appliquer sur la peau ou sur au moins un ongle d'un humain, ledit élément de décor comportant :
- un décor à transférer au moins partiellement sur la peau ou sur un ongle d'un humain, ledit décor comportant au moins une couche de décor, présentant une première surface externe et une seconde surface externe,
- un film support dudit décor, ledit film support étant fixé de façon amovible sur la première surface externe de ladite couche de décor,
- une couche de colle inerte, appliquée sur la seconde surface externe de ladite couche de décor, ladite couche de colle inerte étant activable par ledit activateur,
caractérisé en ce que l'activateur comprend un composant fluide, pâteux, semi pâteux, ou solide notamment pulvérulent, applicable sur la peau ou sur au moins un ongle d'un humain.

L'association d'une couche de colle inerte sur la couche de décor permet de disposer d'une adhérence constante entre le décor et la colle inerte. De cette façon, quand l'activateur de colle est mis en contact avec la colle, le décor reste adhérent à la colle audit endroit où la colle inerte est en contact avec l'activateur et le décor ne se transfère qu'à l'endroit précis où l'activateur a été mis en contact avec l'activateur. Cela permet d'obtenir des transferts de décor précis, esthétiques et de forme voulue.

L'article conforme à l'invention peut également comporter les caractéristiques suivantes, prises séparément ou en combinaison :
- le composant fluide peut être un solvant de ladite colle inerte ;
- ledit solvant peut comporter l'un au moins des solvants parmi l'eau, l'alcool, l'acétate ou l'acétone ;
- la couche de colle inerte peut comporter un premier composant d'une colle bi-composante et le composant fluide peut comporter un second composant de ladite colle bi-composante ;
- l'article peut comporter un applicateur de composant fluide, semi fluide ou solide.
- l'activateur peut comprendre une source de rayonnement lumineux, de préférence un rayonnement Ultraviolet ;
- l'activateur peut encore comprendre une source d'apport de chaleur ;
- l'activateur peut encore comprendre une source d'apport de froid ;
- l'activateur peut être une source de pression ;
- ladite couche de colle inerte peut comporter plusieurs sous-couches de produits superposées les unes sur les autres ;
- ledit décor peut être une feuille présentant une surface mesurant au moins 0.5 cm², voire au moins 1 cm², voire au moins 10 cm² ;
- en variante, ledit décor peut être une feuille présentant une surface mesurant entre 0,5 cm² et 100cm², voire entre 10 cm² et 100 cm² ;
- ledit décor peut être une feuille présentant un motif en deux ou trois dimensions, ou à effet imitant trois dimensions, ou imitant un tissu, un effet de particules, un métal, ou un décor donnant des illusions d'optiques suivant son orientation au regard d'une source lumineuse ;
- le film support de ladite couche de décor peut être un film transparent ;
- l'article peut comporter un film de protection amovible couvrant au moins partiellement ladite couche de colle inerte.

L'invention concerne également un procédé de transfert au moins partiel d'un décor d'un élément de décor de l'article tel que défini ci-dessus, dans lequel l'activateur comprend un composant fluide, pâteux, semi pâteux, ou solide notamment pulvérulent, applicable sur la peau ou sur au moins un ongle d'un humain, ledit procédé comprenant les étapes suivantes :
- application, sur la peau ou sur un ongle, du composant fluide, pâteux,
   semi pâteux, ou solide notamment pulvérulent que comporte l'activateur de ladite couche de colle inerte,
- application dudit élément de décor sur la peau ou sur l'ongle, en plaçant la couche de colle inerte de l'élément de décor sur le composant fluide, pâteux, semi-pâteux, ou solide appliqué sur la peau ou l'ongle,
- attente d'un temps prédéterminé d'activation de la colle,
- retrait de l'élément de décor.

Suivant une variante, le procédé conforme à l'invention peut également être mis en œuvre avec un article comportant un applicateur de composant fluide, semi fluide ou solide. Suivant ce procédé, l'application du composant fluide se fait au moyen de l'applicateur.

Suivant encore une variante, le procédé peut mettre en œuvre un article dans lequel l'activateur comprend une source de rayonnement lumineux, de préférence un rayonnement Ultraviolet. Conformément à l'invention, ledit procédé comportant une étape supplémentaire suivant laquelle, après l'étape d'application dudit élément de décor sur la peau ou sur l'ongle, on soumet l'élément de décor à un rayonnement Ultraviolet pendant un temps prédéterminé.

Suivant encore une variante du procédé conforme à l'invention, après l'étape d'application de l'élément de décor sur la peau ou sur un ongle, on soumet l'élément de décor à une source de chaleur pendant un temps prédéterminé. La source de chaleur peut produire une chaleur dont la température est comprise entre 25°C et 40°C.

Par ailleurs, il est décrit une variante non conforme à l'invention, assurant le transfert au moins partiel d'un décor d'un élément de décor d'un article conforme à l'invention dans lequel l'activateur comprend une source de rayonnement lumineux, de préférence un rayonnement Ultraviolet, le procédé comportant les étapes suivantes :
- application dudit élément de décor sur la peau ou sur l'ongle, en plaçant la couche de colle inerte de l'élément de décor directement sur la peau ou sur l'ongle,
- soumission de l'élément de décor, positionné sur la peau ou sur un ongle, à un rayonnement,
- attente d'un temps prédéterminé d'activation de la colle,
- retrait de l'élément de décor.

De préférence, dans le cadre de ce procédé, le rayonnement est un rayonnement thermique ou lumineux.

Suivant encore une autre variante du procédé conforme à l'invention, il peut, en outre, comporter une étape de pression de l'élément de décor sur la peau ou sur un ongle.

### BREVE DESCRIPTION DES DESSINS

Pour pouvoir être exécutée, l'invention est exposée de façon suffisamment claire et complète dans la description suivante qui est, en plus, accompagnée de dessins dans lesquels :
- La figure 1 est une vue en perspective d'un élément de décor d'un article conforme à l'invention ;
- La figure 2 est un agrandissement de la zone II montrée en figure 1 ;
- La figure 3 est une vue en perspective d'un flacon comportant un activateur d'un article conforme à l'invention, d'un applicateur et d'un doigt ;
- La figure 4 est une vue de face d'une paupière ;
- La figure 5 est une vue de face de la paupière montrée en figure 4 sur laquelle a été appliqué un décor ;
- La figure 6 est une vue de face d'un élément de décor après application du décor sur la paupière ;
- La figure 7 est une autre vue en perspective d'un flacon comportant un autre activateur d'un article conforme à l'invention, ainsi qu'un applicateur et un doigt ;
- La figure 8 est une vue en perspective d'un élément de décor appliqué sur l'ongle du doigt montré en figure 7, après application de l'activateur montré en figure 7 ;
- La figure 9 est une autre vue en perspective du doigt montré en figures 7 et 8 après retrait de l'élément de décor ;
- La figure 10 est une vue de face d'un élément de décor après application du décor sur l'ongle ;
- La figure 11 est une vue de face d'une épaule derrière laquelle a été apposé un décor en forme de lettre ;
- La figure 12 est une vue en perspective d'un applicateur et d'un réservoir d'activateur, l'applicateur permettant d'obtenir le décor en forme de lettre montré en figure 11 ;
- La figure 13 est une vue de face d'une épaule sur laquelle est appliqué l'élément de décor qui est soumis à un apport de chaleur,
- Et la figure 14 est une vue de face d'un élément de décor après application du décor sur l'épaule.

### DESCRIPTION PLUS DETAILLEE

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

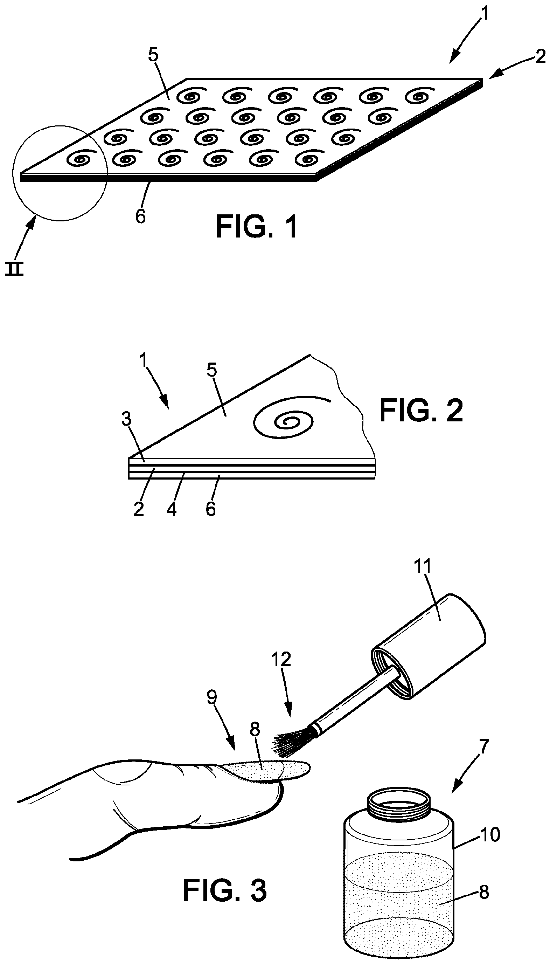

La figure 1 montre un élément de décor 1 d'un article conforme à l'invention, qui se présente sous la forme d'une feuille rectangulaire souple avec une couche de décor continue. La feuille présente un plus petit côté mesurant au moins 10 cm, voire au moins 1 cm, voire au moins 0,1 cm. De préférence le plus petit côté mesure entre 0.1 cm et 30 cm, voire entre 0.1 cm et 5 cm, voire entre 0,1 cm et 1 cm. La feuille présente de préférence une surface mesurant au moins 0.5 cm², voire au moins 1 cm², voire au moins 10 cm². De préférence la feuille présente une surface mesurant entre 0,5 cm² et 100cm², voire entre 10 cm² et 100 cm². Il devra être compris que la feuille pourrait présenter d'autres dimensions et une autre forme sans sortir du cadre de l'invention.

En variante, une bande de support montée présente des éléments de décor discontinus lesdits éléments de décor présentant un côté mesurant au moins 0,25 cm et une surface mesurant au moins 0,06cm². La bande de support pourrait se présenter, par exemple, sous la forme d'une bande. Les éléments de décor d'un même support pourraient être tous identiques ou différents.

Cet élément de décor 1 peu être rigide mais sera généralement suffisamment souple pour être appliqué sur une surface courbe ou souple comme un ongle ou une partie du corps d'un humain recouverte de peau, comme une paupière, une épaule, un bras etc.

Dans les exemples qui vont être présentés, l'élément de décor est appliqué sur un ongle, une paupière ou une épaule. Il devra être entendu que l'invention n'est pas limitée à une application d'un élément de décor sur ces zones spécifiques et que l'élément de décor conforme à l'invention pourrait être appliqué sur d'autres parties du corps humain.

Comme cela est représenté à la figure 2, l'élément de décor 1 est composé de plusieurs couches superposées les unes sur les autres : une première couche constitue un décor 2, illustré schématiquement par une feuille sur laquelle ont été imprimés des motifs en forme de spirales répartis uniformément et couvrant l'ensemble de la surface de la couche de décor 2.

La couche de décor 2 pourrait elle-même être réalisée par plusieurs couches superposées les unes sur les autres, de couleurs et de textures différentes sans sortir du cadre de l'invention. Ainsi une couche externe transparente de protection du décor (comme un vernis ou un film en plastique) peut être présente dans la couche de décor 2.

La couche de décor 2 est une couche décorative : il peut s'agir d'une impression imitant des paillettes, un tissu, un effet de particules, ou permettre d'obtenir un effet sensoriel comme un toucher velours, une impression donnant un effet en trois dimensions ou des illusions d'optique en fonction de l'orientation du décor par rapport à une source de lumière, etc. ou simplement une couleur unie.

La couche de décor 2 comporte une première surface externe 3 et une seconde surface externe 4.

La première surface externe 3 est fixée de façon amovible à un film support 5 de la couche de décor. Le film support 5 est, dans le cas présent, transparent afin de pouvoir distinguer le décor de la couche de décor 2.

Il devra être entendu que le film support 5 pourrait être réalisé non transparent sans sortir du cadre de l'invention.

Le film support 5 a pour fonction de protéger la couche de décor (durant son stockage et faciliter le transfert du décor) et de permettre une plus grande facilité de manipulation de l'élément de décor car il lui apporte une certaine robustesse.

Conformément à l'invention, une couche de colle inerte 6 est appliquée sur l'ensemble de la seconde surface externe 4, opposée à la surface externe 3 solidaire du film support 5. On comprendra par « inerte » le fait d'être sans effet collant en tant que tel au touché.

La couche de colle inerte 6 présente la particularité de ne pas coller tant qu'elle n'est pas mise en contact avec un activateur qui peut être de différentes natures comme il sera vu par la suite (fluide, rayonnement etc).

A titre d'exemple, la colle peut être un polymère de type cellulose ou nitrocellulose et l'activateur peut être un solvant de type acétate, acétone, sucroester, ou bien l'activateur peut être un ou plusieurs plastifiants (le Citroflex par exemple).

Le solvant pourrait également comprendre de l'huile de ricin, par exemple dans le cadre de la réalisation d'activateur sous forme fluide à appliquer sur un ongle, car l'huile de ricin permet, en plus, d'assurer un traitement des cuticules de l'ongle.

La colle mise en œuvre pourrait également présenter un pH différent de celui du solvant d'activation : par exemple le polymère de la colle pourrait présenter un pH acide et le solvant d'activation pourrait présenter un pH basique.

La colle inerte à base de cellulose pourrait également est filmifiée en la mettant en contact avec un solvant comportant du glutaraldéhyde.

La couche de colle inerte ne s'altère pas sous une température pouvant atteindre 60 °C et dans une atmosphère humide où le taux d'humidité atteint 85 %.

La colle inerte 6 peut également comporter un premier composant d'une colle bi-composante, comme par exemple une colle à base de silicone. Dans un tel cas, l'activateur peut être un fluide comportant le second composant de la couche bi composante : dans le cas de l'exemple d'une couche de colle inerte comportant du silicone, le second composant que comporte l'activateur peut être à base de platine (pour, par exemple, une colle biotype du type « Pressure sentitive adhesive », connue sous le nom de colle PSA).

La couche de colle inerte peut également être recouverte entièrement ou partiellement par un film de protection amovible (non représenté) de manière à être protégée avant une première utilisation de l'élément de décor 1.

La figure 3 montre un premier exemple d'activateur 7 se présentant sous la forme d'un fluide 8 à appliquer sur un ongle 9.

L'activateur 7 conforme à l'invention est un activateur supportable par la peau ou par un ongle d'un humain. On comprendra par « activateur supportable par la peau ou par un ongle d'un humain » un activateur qui ne dégrade pas la peau ou l'ongle quand il est mis en contact avec la peau ou l'ongle de façon ponctuelle et non prolongée (c'est-à-dire tout au plus quelques jours pour un fluide et quelques minutes pour un rayonnement). L'activateur est ainsi dermatologiquement compatible avec la peau ou les ongles.

L'activateur en tant que tel ne présente pas d'effet collant.

Le fluide 8 de l'activateur 7 est conditionné dans un flacon 10, équipé d'un bouchon 11, le bouchon 11 comportant un applicateur 12 de fluide 8.

L'applicateur 12 peut être un pinceau par exemple (ou tout autres types d'applicateur de formule connue dans l'état de l'art dans le secteur de l'application de formule cosmétique ou de tout autres secteur, comme les peintures, l'alimentaire, la calligraphie....), l'applicateur 12 permettant d'appliquer l'activateur 7 sous forme fluide 8 sur l'ongle 9 à la façon d'un vernis à ongles.

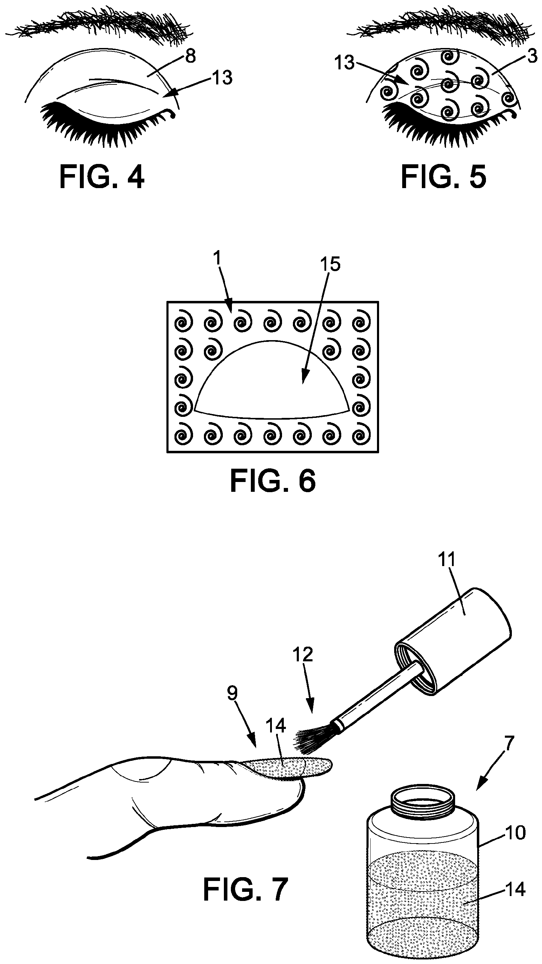

Le pinceau de l'applicateur 12 peut également servir à appliquer précisément l'activateur 7 sous forme fluide 8 sur une paupière 13, comme montré en figure 4. Il peut également servir à appliquer l'activateur 7 en formant un motif, dessiné par l'utilisateur.

Il devra être compris que l'invention n'est pas spécifiquement limitée à la mise en œuvre d'un applicateur se présentant sous la forme d'un pinceau. L'applicateur pourrait être un stylo, un tampon, une mousse, un poinçon, un rouleau, etc, sans sortir du cadre de l'invention.

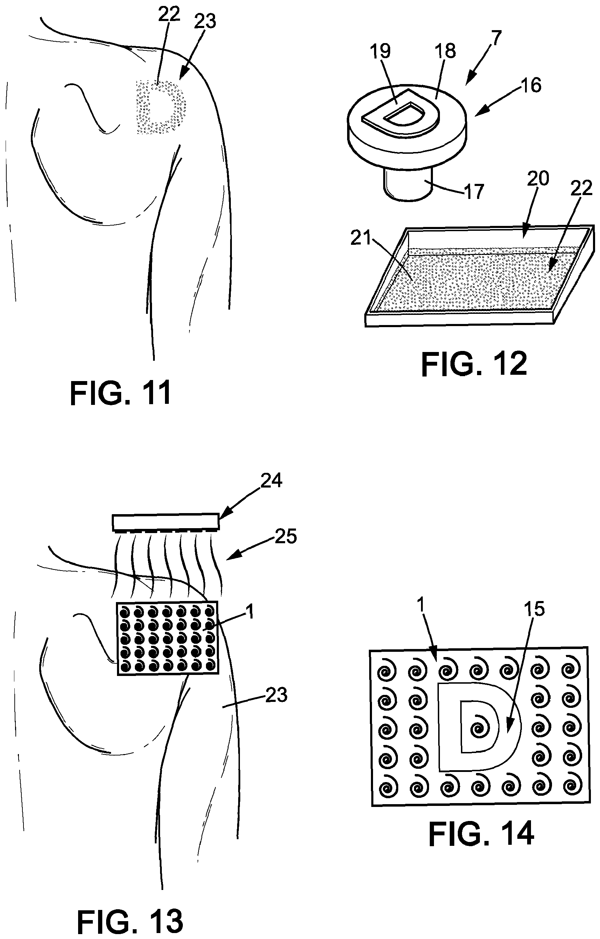

Un autre applicateur est montré en figure 12, comportant un poinçon en forme de lettre et un réservoir comprenant un activateur. Il sera décrit par la suite dans le cadre d'une mise en œuvre particulière de l'invention.

La figure 7 montre un autre activateur 7 de colle inerte conforme à l'invention, conditionné dans un flacon 10 équipé d'un bouchon 11 doté d'un applicateur 12.

L'activateur 7 comporte, dans le cadre de cet exemple, un solvant 14 capable d'activer la couche de colle inerte (voir les exemples de solvants cités précédemment).

L'activateur 7 peut également être d'un autre type : il peut comprendre une source de rayonnements lumineux, comme une source de rayonnements ultraviolets 30. L'activateur peut également comprendre, à la fois, une source de rayonnement lumineux 30 et un fluide à appliquer sur la peau ou sur un ongle.

Enfin, l'activateur peut également comprendre une source d'apport de chaleur : par exemple, l'activateur 7 peut comprendre une lampe chauffante. Dans ce cas, la chaleur émise par la lampe ou une quelconque source émettant de la chaleur ne doit pas dépasser 40 °C pour ne pas brûler la peau ou l'ongle et être supportable par la personne s'appliquant l'élément de décor sur la peau ou sur l'ongle.

On peut également envisager que l'activateur soit une pression exercée sur l'article, ladite pression venant éclater des capsules contenues dans la couche de colle inerte, les capsules comportant un fluide collant.

On peut encore envisager que l'activateur soit un apport de froid : l'apport de froid (application d'un fluide réfrigéré, par exemple) sur la colle activerait cette dernière à son contact.

Ces modes de réalisation d'articles vont maintenant être décrits en faisant références aux figures 3 à 14 illustrant trois modes de réalisation d'articles conformes à l'invention et trois procédés de mise en œuvre conformes à l'invention.

Les figures 3 à 6 montrent un premier exemple d'article conforme à l'invention dont l'activateur est fluide et est compris dans un flacon 10.

L'activateur 7, sous forme de fluide, comporte un composant d'une colle bi composante. La couche de colle inerte 6 comporte le composant complémentaire du composant que comporte l'activateur pour que la colle soit activée.

Pour appliquer l'élément de décor 1 sur un ongle 9, ou sur une paupière 13, (ou sur toute autre partie du corps humain), on applique tout d'abord l'activateur 7 sur toute la surface de l'ongle 9 (figure 3) ou sur toute la paupière 13 fixe et mobile d'un œil d'un humain, en utilisant l'applicateur 12 solidaire du bouchon 11.

Sans attendre le séchage / évaporation de l'activateur, l'élément de décor 1 est appliqué sur l'ongle 9 ou sur la paupière 13, en apposant la couche de colle inerte 6 de l'élément de décor 1 directement sur la surface recouverte d'activateur 7 sous forme fluide 8.

On attend un temps prédéterminé (quelques secondes), le temps que l'activateur 7 active la colle 8.

Puis, l'élément de décor 1 est retiré délicatement.

Toute la surface de l'élément de décor en contact avec l'activateur 7 se décolle alors du film support 5, car la couche de colle 6 est devenue active et présente une adhérence plus forte que celle retenant la couche de décor 2 au film support 5.

Ainsi, après retrait de l'élément de décor 1, on observe une forme vide 15 dans la couche de décor 2 de l'élément 1 correspondant exactement à la forme du décor 2 réalisé sur l'ongle 9 ou sur la paupière 13 (figure 5).

Les figures 7 à 10 montrent un second exemple d'article conforme à l'invention dont l'activateur est fluide et est compris dans un flacon 10.

L'activateur 7 est un solvant 14 de la couche de colle inerte 6 de l'élément de décor (le solvant pouvant être composé d'un mono produit ou d'un assemblage de composés).

De façon similaire à l'exemple précédent, l'activateur 7 sous forme de solvant 14 est appliqué sur toute la surface d'un ongle 9 en utilisant l'applicateur 12 en forme de pinceau, solidaire du bouchon 11 (figure 7)

Puis, l'élément de décor est appliqué sur l'ongle, en plaçant la couche de colle inerte 6 sur l'activateur 7.

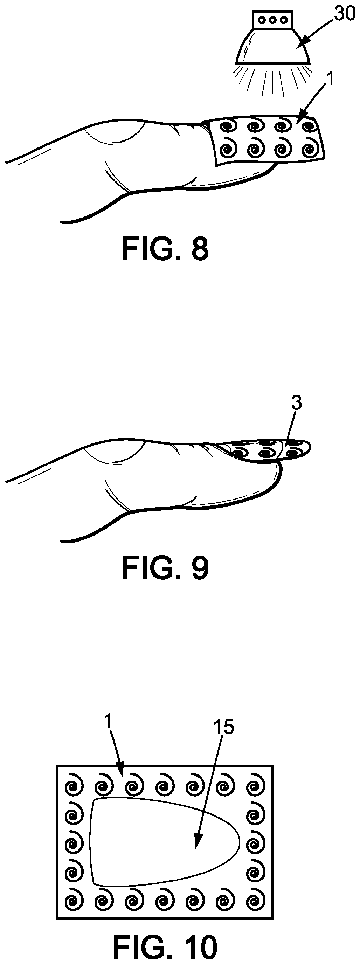

Après un temps d'attente prédéterminé (quelques secondes), ou instantanément (suivant la nature de la colle de de l'activateur), l'élément de décor est retiré : toute la surface de la couche de décor 2, solidaire de la couche de colle 6 mise en contact avec le solvant 14, reste collée sur l'ongle (figure 9), tandis que la partie de la couche de décor 2, solidaire de la couche de colle inerte 6 qui n'a pas été mise en contact avec l'activateur, reste collée au film support 5.

Il en résulte, comme pour l'exemple précédent, un espace vide 15 sans décor dans l'élément de décor 1 après retrait de l'élément de décor 1 de l'ongle 9 (figure 10).

Une variante de procédé et d'article conforme à l'invention pourrait également être prévue : au lieu d'une couche de colle inerte 6 activable par un solvant 14, on pourrait prévoir une couche de colle inerte 6 activable par rayonnement Ultraviolet 30 (voir figure 8) : Il suffit, pour ce faire, d'appliquer sur l'ongle un activateur 7 particulier, qui n'active la couche de colle inerte 6 par contact avec elle qu'en présence de rayonnement Ultraviolet 30.

Il pourrait également être prévu une solution suivant laquelle seuls les rayonnements Ultraviolets activent le composant de colle inerte.

Il pourrait également être prévu une solution suivant laquelle seuls les rayonnements Ultraviolets activent le composant de colle inerte.

Les figures 11 à 14 montrent encore un autre exemple de procédé conforme à l'invention mettant en œuvre un autre article conforme à l'invention.

Dans cet exemple, l'activateur 7 comporte un poinçon 16 se présentant sous la forme d'un tampon avec un ergot de préhension 17 opposé à une face d'application 18 sur laquelle s'érige un motif en relief 19 (une lettre D dans l'exemple illustré mais cela pourrait être un tout autre motif). L'activateur 7 comporte également un boitier ouvert 20 dans lequel se trouve une éponge 21 imbibée d'un fluide d'activation 22.

La figure 11 montre une épaule sur laquelle on a appliqué le fluide d'activation à l'aide du poinçon 16. Pour ce faire, la lettre en relief 19 a été pressée contre l'éponge 22 du boitier 20 et ainsi imbibée de fluide d'activation 22. Puis, la lettre en relief 19 a été pressée sur la surface de la peau de l'épaule 23 (figure 11).

Puis, comme le montre la figure 13, l'élément de décor 1 a été apposé contre l'épaule 23, avec la couche de colle inerte 6 de l'élément de décor 1 appliquée contre le fluide d'activation 22 appliqué au préalable sur l'épaule 23.

Le fluide d'activation 22 présente la particularité de n'activer la colle inerte que sous l'effet de la chaleur.

C'est pourquoi, en figure 13, est représentée une lampe chauffante 24 diffusant de la chaleur 25 en direction de l'élément de décor 1 appliqué contre l'épaule 23, sur la surface couverte du fluide d'activation.

La température de la chaleur 25 diffusée en direction de l'épaule 23 est comprise entre 25 et 40 °C, de sorte à ne pas créer d'inconfort pour la personne recevant l'élément de décor et de sorte à ne pas brûler la peau.

Il peut également être appliqué une pression sur l'élément de décor pour favoriser l'adhérence du décor sur la peau (ou sur l'ongle). Après un temps prédéterminé (quelques secondes), ou instantanément (suivant la nature de la colle et de l'activateur, notamment), l'élément de décor 1 est décollé : seule la partie de la couche de décor 2 solidaire de la couche de colle 6 qui a été en contact avec l'activateur reste collé sur la peau de l'épaule 23. C'est ainsi que sur l'épaule 23 reste un décor 2 présentant la forme de la lettre D (forme de la lettre réalisée à l'aide du poinçon). L'élément de décor 1, après retrait, comporte un espace vide 15 correspondant au négatif du décor en forme de D collé sur l'épaule 23.

On comprend de la description qui précède comment l'invention permet de créer des décors 2 précis sur la peau ou sur les ongles d'un humain à partir d'un élément de décor de forme non déterminée au préalable.

On comprend également que, grâce à la conception de l'élément de décor comportant une association de couches de décor et de colle inerte compatible, on peut créer des effets de décors nouveaux grâce à la mise en œuvre de couches de décor à effets, qui ne peuvent pas être facilement obtenus autrement. Ainsi, l'invention permet de créer des décors précis et originaux comme par exemple une illusion de décor pailleté.

Une autre solution conforme à l'invention pourrait prévoir une couche support poreuse au solvant, ce qui favoriserait le séchage de la colle.

## Revendications

1. Article pour décorer la peau (13 ; 23) ou un ongle (9) d'un humain, comportant un activateur (7) qui est supportable par la peau (13 ; 23) ou un ongle d'un humain et un élément de décor (1) à appliquer sur la peau (13 ; 23) ou sur au moins un ongle (9) d'un humain, ledit élément de décor (1) comportant :
- un décor (2) à transférer au moins partiellement sur la peau (13 ; 23) ou sur un ongle (9) d'un humain, ledit décor (2) comportant au moins une couche de décor (2), présentant une première surface externe (3) et une seconde surface externe (4),
- un film support (5) dudit décor (2), ledit film support (5) étant fixé de façon amovible sur la première surface externe (3) de ladite couche de décor (2),
- une couche de colle inerte (6), appliquée sur la seconde surface externe (4) de ladite couche de décor (2), ladite couche de colle inerte (6) étant activable par ledit activateur (7),
**caractérisé en ce que** l'activateur comprend un composant fluide (8 ; 14 ; 22), pâteux, semi pâteux, ou solide notamment pulvérulent, applicable sur la peau (13 ; 23) ou sur au moins un ongle (9) d'un humain.

2. Article selon la revendication 1, dans lequel l'activateur comprend un composant fluide (14) et le composant fluide (14) est un solvant de ladite colle inerte, ledit solvant (14) comportant de préférence l'un au moins des solvants parmi l'eau, l'alcool, l'acétate ou l'acétone.

3. Article selon la revendication 1, dans lequel l'activateur comprend un composant fluide (8), la couche de colle inerte (6) comporte un premier composant d'une colle bi-composante et le composant fluide (8) comporte un second composant de ladite colle bi-composante.

4. Article selon l'une quelconque des revendications précédentes, comportant un applicateur (12 ; 16) de composant fluide (8 ; 14 ; 22), semi fluide ou solide.

5. Article selon l'une quelconque des revendications précédentes, dans lequel l'activateur (7) comprend un composant fluide (8 ; 14) et une source de rayonnement lumineux, de préférence un rayonnement Ultraviolet (30).

6. Article selon l'une quelconque des revendications précédentes, dans lequel l'activateur (7) comprend un composant fluide (22) et une source (24) d'apport de chaleur (25).

7. Article selon l'une quelconque des revendications 1 à 4, dans lequel l'activateur comprend un fluide réfrigéré.

8. Article selon l'une quelconque des revendications précédentes, dans lequel ladite couche de colle inerte (6) comporte plusieurs sous-couches de produits superposées les unes sur les autres.

9. Article selon l'une quelconque des revendications précédentes, dans lequel ledit décor (2) est une feuille présentant une surface mesurant au moins 0.5 cm², voire au moins 1 cm², voire au moins 10 cm².

10. Article selon l'une quelconque des revendications 1 à 8, dans lequel ledit décor (2) est une feuille présentant une surface mesurant entre 0,5 cm² et 100cm², voire entre 10 cm² et 100 cm².

11. Article selon l'une quelconque des revendications précédentes, dans lequel ledit décor (2) est une feuille présentant un motif en deux ou trois dimensions, ou à effet imitant trois dimensions, ou imitant un tissu, un effet de particules, un métal, ou un décor donnant des illusions d'optiques suivant son orientation au regard d'une source lumineuse.

12. Article selon l'une quelconque des revendications précédentes, dans lequel le film support (5) de ladite couche de décor (2) est un film transparent.

13. Article selon l'une quelconque des revendications précédentes, comportant un film de protection amovible couvrant au moins partiellement ladite couche de colle inerte (6).

14. Procédé de transfert au moins partiel d'un décor (2) d'un élément de décor (1) de l'article selon l'une quelconque des revendications précédentes, comprenant les étapes suivantes :
- application, sur la peau (13 ; 23) ou sur un ongle (9), du composant fluide (8 ; 14 ; 22), pâteux, semi pâteux, ou solide notamment pulvérulent que comporte l'activateur (7) de ladite couche de colle inerte (6),
- application dudit élément de décor (1) sur la peau (13 ; 23) ou sur l'ongle (9), en plaçant la couche de colle inerte (6) de l'élément de décor (1) sur le composant fluide (8 ; 14 ; 22), pâteux, semi pâteux, ou solide, appliqué sur la peau (13 ; 23) ou l'ongle (9),
- attente d'un temps prédéterminé d'activation de la colle,
- retrait de l'élément de décor (1).

15. Procédé selon la revendication 14, mettant en œuvre un article dont l'activateur comprend un composant fluide (8 ; 14 ; 22), suivant lequel l'application du composant fluide (8 ; 14 ; 22) se fait au moyen d'un applicateur (12 ; 16).

16. Procédé selon l'une quelconque des revendications 14 ou 15, mettant en œuvre un article selon la revendication 5, ledit procédé comportant une étape supplémentaire suivant laquelle, après l'étape d'application dudit élément de décor (1) sur la peau (13 ; 23) ou sur l'ongle (9), on soumet l'élément de décor (1) à un rayonnement lumineux, notamment Ultraviolet (30), pendant un temps prédéterminé.

17. Procédé selon l'une quelconque des revendications 14 à 15, mettant en œuvre un article selon la revendication 6, suivant lequel, après l'étape d'application de l'élément de décor (1) sur la peau (13 ; 23) ou sur un ongle (9), on soumet l'élément de décor (1) à une source (24) de chaleur (25) pendant un temps prédéterminé, la source (24) de chaleur produisant de préférence une chaleur (25) dont la température est comprise entre 25°C et 40°C.

18. Procédé selon l'une quelconque des revendications 14 à 17, comportant en outre une étape de pression de l'élément de décor (1) sur la peau (13 ; 23) ou sur un ongle (9).

## Patentansprüche

1. Artikel zum Dekorieren der Haut (13; 23) oder eines Nagels (9) einer Person, aufweisend einen für die Haut (13; 23) oder einen Nagel einer Person verträglichen Aktivator (7) und ein auf die Haut (13; 23) oder auf mindestens einen Nagel (9) einer Person aufzubringendes Dekorelement (1), wobei das Dekorelement (1) aufweist:
- ein auf die Haut (13; 23) oder auf einen Nagel (9) einer Person zumindest teilweise zu übertragendes Dekor (2), wobei das Dekor (2) mindestens eine Dekorschicht (2) mit einer ersten Außenfläche (3) und einer zweiten Außenfläche (4) aufweist,
- eine Trägerfolie (5) des Dekors (2), wobei die Trägerfolie (5) auf lösbare Weise an der ersten Außenfläche (3) der Dekorschicht (2) angebracht ist,
- eine auf die zweite Außenfläche (4) der Dekorschicht (2) aufgetragene Schicht Inertkleber (6), wobei die Schicht Inertkleber (6) von dem Aktivator (7) aktivierbar ist,
**dadurch gekennzeichnet, dass** der Aktivator eine auf die Haut (13; 23) oder auf mindestens einen Nagel (9) einer Person auftragbare fluide (8; 14; 22), pastöse, halbpastöse oder feststoffliche insbesondere pulverige Komponente aufweist.

2. Artikel nach Anspruch 1, in welchem der Aktivator eine fluide Komponente (14) aufweist und die fluide Komponente (14) ein Lösungsmittel des Inertklebers ist, wobei das Lösungsmittel (14) vorzugsweise mindestens eines der folgenden Lösungsmittel aufweist: Wasser, Alkohol, Acetat oder Aceton.

3. Artikel nach Anspruch 1, in welchem der Aktivator eine fluide Komponente (8) aufweist, die Schicht Inertkleber (6) eine erste Komponente eines Zweikomponentenklebers aufweist und die fluide Komponente eine zweite Komponente des Zweikomponentenklebers aufweist.

4. Artikel nach einem der vorstehenden Ansprüche, aufweisend einen Applikator (12; 16) für die fluide (8; 14; 22), halbfluide oder feststoffliche Komponente.

5. Artikel nach einem der vorstehenden Ansprüche, in welchem der Aktivator (7) eine fluide Komponente (8; 14) und eine Quelle (30) für Lichtstrahlung, vorzugsweise Ultraviolett-Strahlung, aufweist.

6. Artikel nach einem der vorstehenden Ansprüche, in welchem der Aktivator (7) eine fluide Komponente (22) und eine Quelle (24) zur Bereitstellung von Wärme (25) aufweist.

7. Artikel nach einem der Ansprüche 1 bis 4, in welchem der Aktivator ein gekühltes Fluid aufweist.

8. Artikel nach einem der vorstehenden Ansprüche, in welchem die Schicht Inertkleber (6) mehrere übereinanderliegende Produktteilschichten aufweist.

9. Artikel nach einem der vorstehenden Ansprüche, in welchem das Dekor (2) eine Folie ist, deren Oberfläche eine Abmessung von mindestens 0,5cm², insbesondere mindestens 1cm², insbesondere mindestens 10cm² hat.

10. Artikel nach einem der Ansprüche 1 bis 8, in welchem das Dekor (2) eine Folie ist, deren Oberfläche eine Abmessung zwischen 0,5cm² bis 100cm², insbesondere zwischen 10cm² und 100cm² hat.

11. Artikel nach einem der vorstehenden Ansprüche, in welchem das Dekor (2) eine Folie ist, die aufweist: ein Motiv in zwei oder drei Dimensionen oder einen drei Dimensionen imitierenden oder ein Gewebe imitierenden Effekt, einen Partikeleffekt, ein Metall oder ein Dekor, das je nach seiner Orientierung bezüglich einer Lichtquelle optische Täuschungen bereitstellt.

12. Artikel nach einem der vorstehenden Ansprüche, in welchem die Trägerfolie (5) der Dekorschicht (2) eine transparente Folie ist.

13. Artikel nach einem der vorstehenden Ansprüche, aufweisend eine lösbare Schutzfolie, die die Schicht Inertkleber (6) zumindest teilweise bedeckt.

14. Verfahren einer mindestens teilweisen Übertragung eines Dekors (2) eines Dekorelements (1) des Artikels nach einem der vorstehenden Ansprüche, aufweisend die folgenden Schritte:
- Auftragen der fluiden (8; 14; 22), pastösen, halbpastösen oder feststofflichen insbesondere pulverigen Komponente, die der Aktivator (7) der Schicht Inertkleber (6) aufweist, auf die Haut (13; 23) oder auf einen Nagel (9),
- Auflegen des Dekorelements (1) auf die Haut (13; 23) oder auf den Nagel (9) durch Anordnen der Schicht Inertkleber (6) des Dekorelements (1) auf der fluiden (8; 14; 22), pastösen, halbpastösen oder feststofflichen Komponente, die auf die Haut (13; 23) oder den Nagel (9) aufgetragen worden ist,
- Abwarten einer vorgegebenen Aktivierungszeit des Klebers,
- Abziehen des Dekorelements.

15. Verfahren nach Anspruch 14 unter Verwendung eines Artikels, dessen Aktivator eine fluide Komponente (8; 14; 22) aufweist, gemäß welchem das Auftragen der fluiden Komponente (8; 14; 22) mit Hilfe eines Applikators (12; 16) erfolgt.

16. Verfahren nach einem der Ansprüche 14 oder 15 unter Verwendung eines Artikels nach Anspruch 5, wobei das Verfahren einen zusätzlichen Schritt aufweist, gemäß welchem nach dem Schritt des Auflegens des Dekorelements (1) auf die Haut (13; 23) oder auf den Nagel (9) das Dekorelement (1) während einer vorgegebenen Zeitdauer einer Lichtstrahlung, insbesondere Ultraviolett-Strahlung, (30) ausgesetzt wird.

17. Verfahren nach einem der Ansprüche 14 bis 15 unter Verwendung eines Artikels nach Anspruch 6, gemäß welchem nach dem Schritt des Auflegens des Dekorelements (1) auf die Haut (13; 23) oder auf einen Nagel (9) das Dekorelement (1) während einer vorgegebenen Zeitdauer einer Quelle (24) für Wärme (25) ausgesetzt wird, wobei die Wärmequelle (24) vorzugsweise eine Wärme (25) erzeugt, deren Temperatur zwischen 25°C und 40°C beträgt.

18. Verfahren nach einem der Ansprüche 14 bis 17, ferner aufweisend einen Schritt des Drückens des Dekorelements (1) an die Haut (13; 23) oder einen Nagel (9).

## Claims

1. Article for decorating a person's skin (13; 23) or nail (9), comprising an activator (7) which is tolerated by a person's skin (13; 23) or nail and a decorative element (1) to be applied to the skin (13; 23) or to at least one nail (9) of a person, said decorative element (1) comprising:
- a decoration (2) to be transferred at least partially to the person's skin (13; 23) or nail (9), said decoration (2) comprising at least one decorative layer (2) having a first outer surface (3) and a second outer surface (4),
- a support film (5) supporting said decoration (2), said support film (5) being removably attached to the first outer surface (3) of said decorative layer (2),
- a layer of inert adhesive (6), applied to the second outer surface (4) of said decorative layer (2), said activator (7) being able to activate said layer of inert adhesive (6),
**characterized in that** the activator comprises a component that is fluid (8; 14; 22), pasty, semi-pasty, or solid particularly powdery, which can be applied to the skin (13; 23) or to at least one nail (9) of a person.

2. Article according to claim 1, wherein the activator comprises a fluid component (14) and the fluid component (14) is a solvent for said inert adhesive, said solvent (14) comprises at least one solvent among water, alcohol, acetate or acetone.

3. Article according to claim 1, wherein the activator comprises a fluid component (14), the layer of inert adhesive (6) comprises a first component of a two-component adhesive and the fluid component (8) comprises a second component of said two-component adhesive.

4. Article according to any preceding claim, comprising an applicator (12; 16) for a fluid (8; 14; 22), semi-fluid, or solid component.

5. Article according to any preceding claim, wherein the activator (7) comprises a fluid component (8; 14) and a source of light radiation, preferably ultraviolet radiation (30).

6. Article according to any preceding claim, wherein the activator (7) comprises a fluid component (22) and a heat (25)-contributing source (24).

7. Article according to any one of claims 1 to 4, wherein the activator comprises a chilled fluid.

8. Article according to any preceding claim, wherein said layer of inert adhesive (6) comprises a plurality of sublayers of products superimposed on one another.

9. Article according to any preceding claim, wherein said decoration (2) is a sheet having a surface area measuring at least 0.5 cm², possibly at least 1 cm², possibly at least 10 cm².

10. Article according to any one of claims 1 to 8, wherein said decoration (2) is a sheet having a surface area measuring between 0.5 cm² and 100 cm², possibly between 10 cm² and 100 cm².

11. Article according to any preceding claim, wherein said decoration (2) is a sheet having a pattern in two or three dimensions, or providing an effect imitating three dimensions, or imitating fabric, a particle effect, a metal, or a decoration providing optical illusions according to its orientation relative to a light source.

12. Article according to any preceding claim, wherein the support film (5) of said decorative layer (2) is a transparent film.

13. Article according to any preceding claim, comprising a removable protective film at least partially covering said layer of inert adhesive (6).

14. Method for the at least partial transfer of a decoration (2) of a decorative element (1) of the article according to any of the preceding claims, comprising the steps of:
- applying, to the skin (13; 23) or to a nail (9), the fluid (8; 14; 22), pasty, semi-pasty, or solid particularly powdery component comprised in the activator (7) for said layer of inert adhesive (6),
- applying said decorative element (1) to the skin (13; 23) or to the nail (9), by placing the layer of inert adhesive (6) of the decorative element (1) on the component that is (8; 14; 22), pasty, semi-pasty, or solid applied to the skin (13; 23) or the nail (9),
- waiting a predetermined time for activation of the adhesive,
- removing the decorative element (1).

15. Method according to claim 14, making use of an article of which the activator comprises a fluid component (8; 14; 22), wherein the application of the fluid component (8; 14; 22) is effected by means of an applicator (12; 16).

16. Method according to either of claims 14 or 15, making use of an article according to claim 5, said method comprising an additional step wherein, after the step of applying said decorative element (1) to the skin (13; 23) or to the nail (9), the decorative element (1) is exposed to light radiation, preferably a ultraviolet radiation (30), for a predetermined time.

17. Method according to any one of claims 14 to 15, wherein, after the step of applying the decorative element (1) to the skin (13; 23) or to a nail (9), the decorative element (1) is exposed to a source (24) of heat (25) for a predetermined time, the source (24) of heat produces heat (25) of a temperature between 25°C and 40°C.

18. Method according to any one of claims 14 to 17, further comprising a step of pressing the decorative element (1) onto the skin (13; 23) or onto a nail (9).
